# EUROPÄISCHE PATENTSCHRIFT

(11) **EP 0 517 728 B1**
(45) Veröffentlichungstag und Bekanntmachung des Hinweises auf die Patenterteilung: **12.07.1995**
(21) Anmeldenummer: 91904176.4
(22) Anmeldetag: 27.02.1991
(51) Int. Cl.: G21C 3/32, G21C 3/322

(54) **KERNREAKTORBRENNELEMENT MIT EINEM TRAGENDEN KÜHLMITTELROHR**
NUCLEAR REACTOR FUEL ELEMENT WITH A SUPPORTING COOLANT PIPE
STRUCTURE D'ELEMENT COMBUSTIBLE DE REACTEUR NUCLEAIRE AVEC UN TUBE POUR CALOPORTEUR AYANT UNE FONCTION DE SUPPORT.

(30) Priorität: 28.02.1990 DE 4006262; 18.09.1990 DE 4029539
(43) Veröffentlichungstag der Anmeldung: 16.12.1992
(73) Patentinhaber: SIEMENS AKTIENGESELLSCHAFT, 80333 München (DE)
(72) Erfinder: MEIER, Werner, D-8551 Kunreuth (DE); LIPPERT, Hans-Joachim, D-8552 Höchstadt/Aisch (DE); LETTAU, Hans, D-8521 Effeltrich (DE); KRAUS, Kurt, D-8552 Höchstadt/Aisch (DE)
(86) Internationale Anmeldenummer: DE9100168
(87) Internationale Veröffentlichungsnummer: WO9113441

(56) Entgegenhaltungen:
- EP-A- 0 054 827
- EP-A- 0 099 323
- EP-A- 0 224 728
- DE-A- 3 533 317
- DE-A- 3 907 638

## Beschreibung

Die Erfindung betrifft ein Kernreaktorbrennelement, insbesondere ein Brennelement nach dem Gattungsbegriff des Patentanspruches 3.

Ein derartiges Kernreaktorbrennelement ist aus der europäischen Patentanmeldung EP-A-0 307 705 bekannt. Das Endstück am Oberende des Kühlmittelrohres dieses bekannten Kernreaktorbrennelementes ist eine plattenartige Endblende mit Durchtrittsöffnungen für das flüssige Kühlmittel. An dieser Endblende befindet sich ein zum Kühlmittelrohr paralleler Bolzen, der von unten in eine Ausnehmung des Brennelementkopfes hineinragt und dort ohne weitere Verbindung lose geführt ist.

Das Endstück am Unterende des Kühlmittelrohres ist ebenfalls eine Endblende, diese Endblende hat außen einen ebenfalls zur Längsrichtung des Kühlmittelrohres parallelen Gewindebolzen, der zwar auch durch eine Durchführung einer gitterförmig durchbrochenen Bodenplatte im Brennelementfuß greift, aber dort mit einer Mutter am Brennelementfuß festgeschraubt ist.

Dieses Kernreaktorbrennelement hat zwischen Brennelementkopf und Brennelementfuß in mehreren Querschnittsebenen gitterförmige Abstandshalter mit Maschen, durch die jeweils ein Kernbrennstoff enthaltender Brennstab greift. Einige dieser Brennstäbe sind sogenannte Tragestäbe, die an beiden Enden Gewindebolzen haben, mit denen sie am Brennelementkopf mit einer Mutter und am Brennelementfuß direkt festgeschraubt sind. Die anderen Brennstäbe greifen lose mit an ihren beiden Enden befindlichen Bolzen in Durchführungen im Brennelementkopf und Brennelementfuß. Alle Brennstäbe sind jeweils mit einer auf Druck vorgespannten Schraubenfeder fixiert, die auf den Gewindebolzen bzw. Bolzen auf dieser Innenseite des Brennelementkopfes sitzen und sich an dieser Innenseite und am betreffenden Brennstab abstützen.

Die Erfindung betrifft ferner insbesondere ein Brennelement für einen Siedewasser-Reaktor mit Brennstäben unterschiedlicher Länge.

Ein derartiges Brennelement ist aus der US-PS 4.675.154 bekannt und enthält einen das Brennelement seitlich umgebenden, oben und unten offenen Brennelementkasten. In axialer Richtung erstreckt sich im Inneren des Kastens ein Kühlmittelrohr mit jeweils mindestens einer Öffnung an seinem oberen und unteren Ende zum Durchtritt von flüssigem Kühlmittel. Eine mit Kühlmittelauslässen versehene Deckplatte am oberen Ende des Kastens und eine mit Kühlmitteleinlässen versehene Bodenplatte am unteren Ende des Brennelementkastens decken die beiden offenen Kastenenden ab. In vorgegebenen axialen Positionen erstrecken sich senkrecht zum Wasserrohr stehende, Stützstege enthaltende Abstandshalter über den Querschnitt des Brennelementkastens; diese Abstandshalter sind über geeignete Mittel (z.B. Haltemittel) am Kühlmittelrohr gehalten. Ferner ist eine Vielzahl von Brennstäben vorgesehen, die jeweils an den Stützstegen mehrerer Abstandshalter seitlich abgestützt sind und keine einheitliche Länge aufweisen müssen.

Es ist für derartige Siedewasser-Brennelemente üblich, manche Brennstäbe als Haltestäbe auszubilden und mit entsprechenden oberen und unteren Verschlußkappen an der Bodenplatte und der Deckplatte zu verschrauben. Sind Brennstäbe unterschiedlicher Länge vorgesehen, so sind die kürzeren Brennstäbe nur mit ihrem unteren Ende an der Bodenplatte verschraubt, ihr oberes Ende wird von entsprechenden Abstandshaltern in Position gehalten. Zumindest einige der Haltestäbe sind aber an ihren oberen Verschlußkappen mit Halterungen für einen Griff versehen, die das gesamte Gewicht des Brennelementes aufnehmen. Zusätzliche Schraubenfedern an diesen oberen Verschlußkappen können die Deckplatte gegen die Verschraubungen an den oberen Endstücken der Haltestäbe drücken.

Diese langen, als Haltestäbe ausgebildeten Brennelemente sind Teil des tragenden Brennelementskelettes und im wesentlichen auf Zug beansprucht; sie stellen zwischen dem Griff, der Deckplatte und der Bodenplatte eine kraftschlüssige, verdrehungssichere Verbindung her und nehmen das Gewicht des Brennelementes und auch die unterschiedlichen Kräfte auf, die bei einer Materialausdehnung infolge der im Betrieb vorliegenden Strahlung und Erwärmung auftreten. Da die Platten von Bohrungen durchsetzt sind, die teils die Wassereinlässe und Wasserauslässe bilden, teils die Verschlußkappen der Brennstäbe aufnehmen, muß deren Dicke entsprechend stark dimensioniert sein und für den Durchtrittsquerschnitt der Einlässe und Auslässe steht nur ein begrenzter Raum zur Verfügung. Daher entsteht besonders an der oberen Deckplatte ein erheblicher Druckunterschied, da das im Betrieb durch das Brennelement in axialer Richtung gepumpte Wasser teilweise verdampft und daher das Wasser/Dampfgemisch zur Aufrechterhaltung einer ungestörten Strömung größere Austrittsquerschnitte erfordern würde.

Wird der Brennelementkasten in axialer Richtung nach oben von dem tragenden Skelett abgezogen, so werden die Brennstäbe zugängig und können von der Seite her inspiziert werden. Für eine weitergehende Inspektion, Wartung und ggf. Auswechslung von Brennstäben muß jedoch die Deckplatte abgeschraubt und somit das tragende Skelett zerlegt werden. Da nach längerem Betrieb die Schraubverbindungen im allgemeinen festsitzen, sind zum Lösen der Brennstäbe erhebliche Kräfte erforderlich. Diese Kräfte können nur an der oberen Verschlußkappen der Haltestäbe eingebracht werden und müssen auf die Verschraubungen der unteren Verschlußkappen durch Torsion der Haltestäbe übertragen werden.

Für die Stäbe ist daher eine hohe mechanische Stabilität, also auch eine gewisse Mindestdicke, erforderlich. Soll aber von einem Brennelement, dessen Stäbe in 8 Reihen und 8 Spalten angeordnet sind ("8x8-Element") auf eine 11x11-Brennelement mit gleichen Außenabmessungen übergegangen werden, so müssen dünnere Stäbe verwendet werden, deren mechanische Stabilität - insbesondere bezüglich der zum Lösen der Schraubverbindung erforderlichen Kräfte - die Anforderungen an Haltestäben nicht genügen. Allgemein ist aus wirtschaftlichen Gründen vorteilhaft, statt weniger, dicker Brennstäbe eine größere Anzahl dünnerer Stäbe zu verwenden.

Der Erfindung liegt die Aufgabe zugrunde, diese Kernreaktorbrennelemente weiterzubilden und insbesondere Tragestäbe mit an beiden Enden befindlichen Gewindebolzen, die sowohl am Brennelementkopf als auch am Brennelementfuß festgeschraubt sind, zu vermeiden.

Bei der neuen Struktur für die tragenden Teile des Brennelement-Skelettes sind die Belastung und die Kräfte besser auf die tragenden Teile verteilt und daher entstehen neue Möglichkeiten, um die Brennstäbe (insbesondere auch kürzere und/oder dünnere Brennstäbe) zu halten, die Montage und Demontage des Brennelementes zu vereinfachen, und/oder günstigere Wassereinlässe und Wasserauslässe mit optimierten Druckgefällen zu schaffen.

Die Erfindung geht dabei davon aus, daß das Kühlmittelrohr ein verhältnismäßig stabiles und verschleißarmes Element ist. Es ist zur Übertragung größerer Kräfte geeignet und muß zur Inspektion oder Ausbesserung des Brennelementes praktisch nicht ausgebaut werden. Es kann daher bei hinreichend stabiler Verbindung zur Bodenplatte das ganze Gewicht des Brennelementes tragen, so daß Haltestäbe überflüssig sind und weder für die Bodenplatte noch für die Deckplatte tragende Schraubverbindungen mit Brennstäben erforderlich werden. Eine starre Verbindung zur Kraftübertragung zwischen Kühlmittelrohr und Bodenplatte kann daher nichtlösbar ausgebildet sein bzw. eine festgefressene Schraubverbindung des Rohres muß auch bei Inspektionen nicht gelöst werden. Die Deckplatte kann dabei praktisch von tragenden Kräften entlastet werden und dient nur noch zum Abdecken des Wasserkanals; als oberer Anschlag für unverschraubte Brennelemente, die nur noch von den Abstandhaltern im Kühlmittelstrom gehalten sind, und zur Aufrechterhaltung der gewünschten Strömung. Bei abgenommener Deckplatte können ohne weiteres Verschrauben die Brennstäbe eingesetzt oder ausgewechselt werden.

Die Erfindung sieht daher zur Lösung der Aufgabe allgemein ein Brennelement mit den Merkmalen des Anspruches 1 vor, die vorteilhaft durch die Merkmale des Anspruches 2 ergänzt werden.

Gegenüber bekannten Brennelement-Strukturen kommt also dem oberen Endstück des Kühlmittelrohres besondere Bedeutung zu, denn es ist gegenüber dem Brennelementkopf nicht mehr frei oder nur lose in einer Ausnehmung geführt, sondern am Brennelementkopf gehaltert. Durch Anheben des Griffes am Brennelementkopf wird dann das ganze Gewicht des Brennelementes vom Kühlmittelrohr übernommen. Treten beim Manipulieren zusätzlich Kräfte am Brennelementkopf auf (z.B. zusätzliche Gewichtskräfte durch Aufliegen des Hebewerzeuges), so können diese durch Federn zwischen Kopf und Fußteil abgefangen werden, ohne das Kühlmittelrohr unkontrolliert zu belasten.

Besonders vorteilhaft ist dabei vorgesehen, daß zumindest alle Brennstäbe, die sich praktisch bis zur Deckplatte im Kopf des Brennelementes erstrecken, an ihren unteren Enden untere Verschlußkappen tragen, mit denen diese Erennstäbe unverschraubt auf der Bodenplatte aufstehen. Die Verschlußkappen brauchen also nur lose in entsprechende Steckverbindungen an der Bodenplatte eingeführt oder auch ohne Verwendung besonderer Halterungen auf der zur Deckplatte weisenden Oberfläche der Bodenplatte aufgesetzt zu sein.

Ferner ist ein unteres Endstück des Kühlmitterohres vorgesehen, das starr mit der Bodenplatte verbunden ist, so daß alle auf der Bodenplatte ausgeübten Kräfte praktisch auf das Kühlmittelrohr übertragen werden. Ein entsprechendes oberes Endstück des Kühlmittelrohres, das auch die Deckplatte trägt, ist mit der Deckplatte und/oder einem an der Deckplatte befestigten Griff lösbar verbunden.

Vorteilhafte Weiterbildungen der Erfindung sind in den Unteransprüchen gekennzeichnet. Im folgenden wird die Erfindung anhand von mehreren Ausführungsbeispielen und 14 Figuren näher erläutert.

Es zeigen:
- FIG 1: eine prinzipielle Darstellung der wichtigsten Teile eines Brennelementes für Siedewasser-Reaktoren,
- FIG 2: teils eine perspektivische Ansicht, teils eine Explosionsdarstellung des Skelettes bei einer ersten Ausführungsform der Erfindung,
- FIG 3 bis 5: eine Aufsicht, einen Längsschnitt und einen Teil-Längsschnitt durch den Brennelement-Kopf,
- FIG 6: einen vergrößerten Ausschnitt aus FIG 4,
- FIG 7: eine Anlegefläche beim Ausschnitt nach FIG 6,
- FIG 8: einen Längsschnitt durch einen Brennelement-Fuß,
- FIG 9 und 10: eine Aufsicht und einen Querschnitt durch den Brennelement-Kopf eines anderen Ausführungsbeispieles,
- FIG 11: eine seitliche Aufsicht auf das erfindungsgemäße Brennelement im Bereich des Fußteiles,
- FIG 12: eine Seitenansicht auf Brennelement-Teile mit langen Stäben und einem kürzeren Stab,
- FIG 13: den Querschnitt durch einen Brennelement-Kasten und
- FIG 14: eine Aufsicht auf einen Abstandhalter des erfindungsgemäßen Brennelementes.

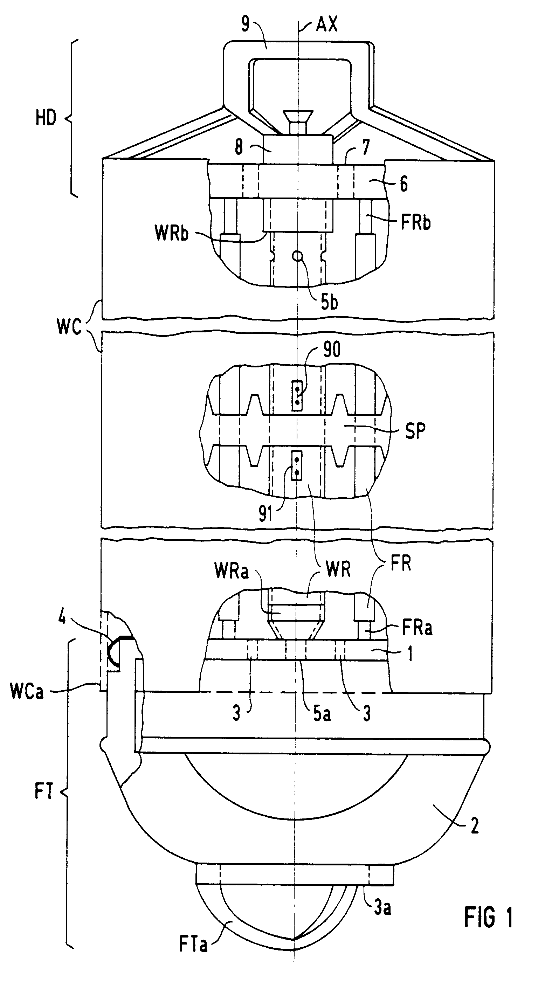

FIG 1 zeigt zunächst ein nichtmaßstabgetreues Schema für ein fertigmontiertes Brennelement, dessen Längsachse mit AX bezeichnet ist.

Das Brennelement ist seitlich umgeben von einem Brennelement-Kasten WC, der oben und unten offen ist. Dort befinden sich der Brennelemente-Kopf HD und das Brennelement-Fußteil FT.

Das Fußteil FT ist mittels eines Bügels FTa an einem Basisgitter im Kern eines Reaktors positioniert. Ein Obergangsstück 2 bildet einen Strömungskanal, der von einer Eintrittsöffnung 3a zu Kühlmitteleinlässen 3 in einer Bodenplatte 1 führt, die das Fußteil bzw. das untere Ende des Brennelementes abdeckt. Der untere Rand WCa des Brennelement-Kastens WC ist gegen das Fußteil FT und dessen Bodenplatte 1 mittels einer Dichtfeder 4 abgestützt und weitgehend gedichtet.

In axialer Richtung erstreckt sich ein Kühlmittelrohr ("Wasserrohr" WR) durch das Innere, vorzugsweise das Zentrum des Kastens WC. Es trägt jeweils am unteren und oberen Ende ein Endstück WRa und WRb sowie Öffnungen 5a, 5b zum Durchtritt von Kühlmittel (Wasser).

Zwischen Haltemitteln 90, 91 sind am Kühlmittelrohr in vorgegebenen, axialen Positionen Abstandhalter ("Spacer" SP) angebracht, die senkrecht zum Rohr WR stehen und Stützstege enthalten. Diese Stützstege bilden ein Gitter mit Maschen, das z.B. aus miteinander verschweißten Hülsen oder aus einander senkrecht durchsetzenden Längsstegen und Querstegen gebildet sein kann. An diesen Stegen sind eine Vielzahl von Brennstäben FR abgestützt, die jeweils zum Kasten parallel sind, die Maschen mehrere Abstandhalter durchsetzen und unten und oben Verschlußkappen FRa, FRb tragen.

Der Brennelement-Kopf HD besitzt eine Deckplatte 6, die den Brennelement-Kasten WC oben abdeckt und Kühlmittel-Auslässe 7 aufweist. An der Oberseite der Deckplatte ist ein Griff 9 angeordnet, wobei Deckplatte 6, Griff 9 und oberes Endstück WRb des Kühlmittelrohres über ein als Anschlagkörper ausgebildetes Verbindungsteil 8 aneinander gehalten sind.

Die Brennstäbe FR sind dabei im wesentlichen in den Maschen der Abstandhalter festgeklemmt, die Bodenplatte 1 und Deckplatte 6 dienen nur als Anschläge, die größere axiale Bewegungen der Stäbe verhindern. Daher tragen die Verschlußkappen der Brennstäbe keine Gewinde, mit denen sie an den Platten verschraubt sind.

Vielmehr stehen die Brennstäbe mit ihren unteren Verschlußkappen auf der Bodenplatte auf und sind auch mit den oberen Verschlußkappen nur lose in entsprechenden Aufnahmepositionen an der Deckplatte geführt.

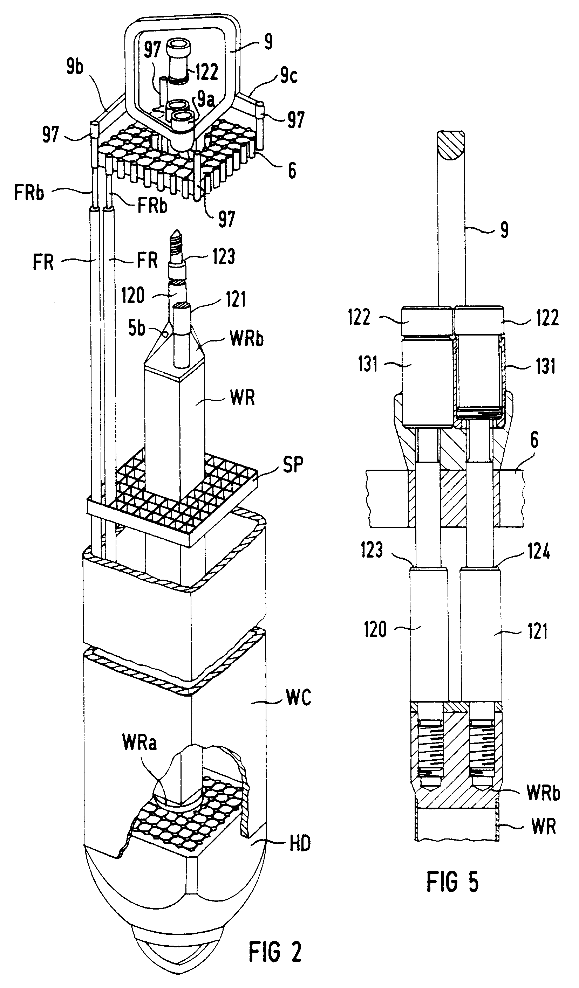

Das Kernreaktorbrennelement nach FIG 2 weist einen Brennelement-Kopf (Deckplatte 6) und einen Brennelement-Fuß HD mit jeweils rechteckigem (hier: quadratischem) Querschnitt, ein langgestrecktes Kühlmittelrohr WR mit kreuzförmigem, rundem oder rechteckigem (hier: quadratischem) Querschnitt und einen langgestreckten Brennelement-Kasten WC ebenfalls mit rechteckigem (quadratischem) Querschnitt auf. Das Kühlmittelrohr ist mittig in gitterförmigen Abstandhaltern SP angeordnet, die sich innerhalb des Brennelement-Kastens befinden und - in Längsrichtung des Kühlmittelrohres gesehen - Abstand voneinander haben. Durch jede Masche dieser Abstandhalter SP greift ein Kernbrennstoff enthaltender Brennstab FR. Diese Brennstäbe greifen lose mit Bolzen, die von Verschlußkappen FRa, FRb an ihren beiden Enden gebildet werden, in Durchführungen im Brennelement-Kopf und Brennelement-Fuß.

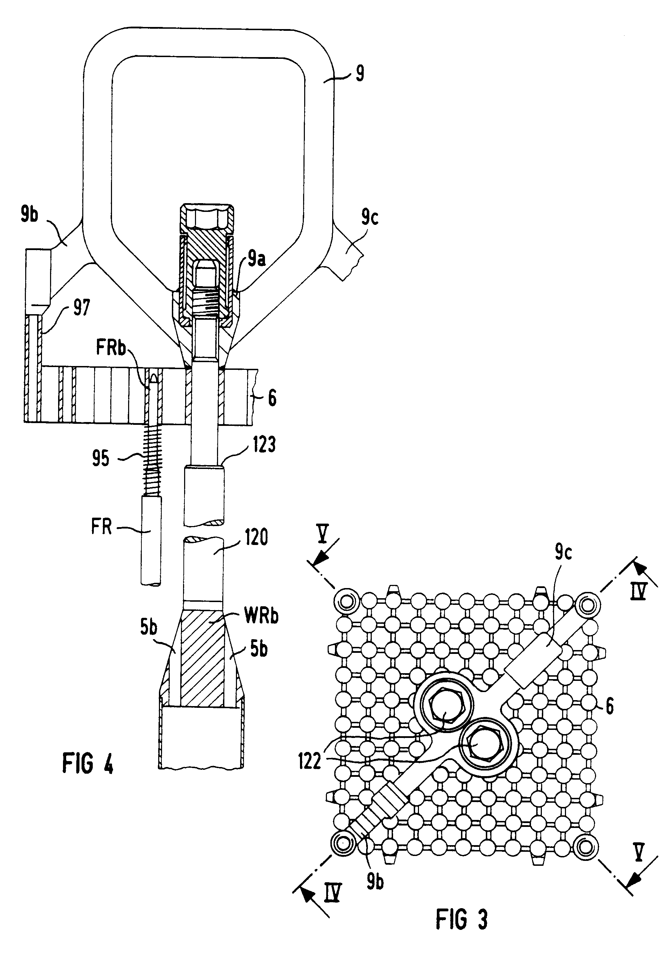

Alle Brennstäbe sind jeweils mit einer auf Druck vorgespannten, in FIG 4 erkennbaren Schraubenfeder 95 fixiert, die auf dem Bolzen auf der Unterseite des Brennelement-Kopfes sitzen und sich an dieser Unterseite und am betreffenden Brennstab FR abstützen.

Während Brennelement-Kopf und Brennelement-Fuß aus rostfreiem Stahl bestehen, ist der langgestreckte Brennelement-Kasten WC aus einer Zirkoniumlegierung gefertigt. Er ist an beiden Enden offen und mit einem Ende über die Deckplatte 6 und mit dem anderen Ende über den Brennelement-Fuß HD gestülpt. Der Brennelement-Kasten umfaßt also seitlich den Brennelement-Kopf und den Brennelement-Fuß. Am (nicht dargestellten) Oberende weist der Brennelement-Kasten an den Ecken nach innen gerichtete Blechstreifen auf, die an Stehbolzen 97 an der Oberseite der Deckplatte 6 im Kopf festgeschraubt sind.

Das Kühlmittelrohr WR mit rechteckigem bzw. quadratischem Querschnitt besteht ebenfalls aus einer Zirkoniumlegierung. Die Seiten seines Querschnittes sind parallel zur jeweils benachbarten Seite des Querschnittes des Brennelement-Kastens.

Die Stege der Abstandhalter durchsetzen sich rechtwinklig und sind ebenfalls zu jeweils zwei zueinander parallelen Seiten des Querschnittes des Kühlmittelrohres WR parallel. Alle Seiten des Querschnittes des Kühlmittelrohres haben von der jeweils benachbarten Seite des Querschnittes des Brennelemente-Kastens WC gleichen Abstand.

Das Kühlmittelrohr ist am Oberende mit einem ersten Endstück WRb und am Unterende mit einem zweiten Endstück WRa verschlossen. Beide Endstücke bestehen ebenfalls aus einer Zirkoniumlegierung und sind an dem Kühlmittelrohr festgeschweißt. Das obere Endstück WRb hat zwei sich in Längsrichtung des Kühlmittelrohres erstreckende Durchtrittsöffnungen für das Kühlmittel (vgl. FIG 4), während das zweite Endstück am Unterende mit einer in FIG 2 nicht erkennbaren Durchtrittsöffnung für das Kühlmittel versehen ist, die sich in Längsrichtung des Kühlmittelrohres erstreckt.

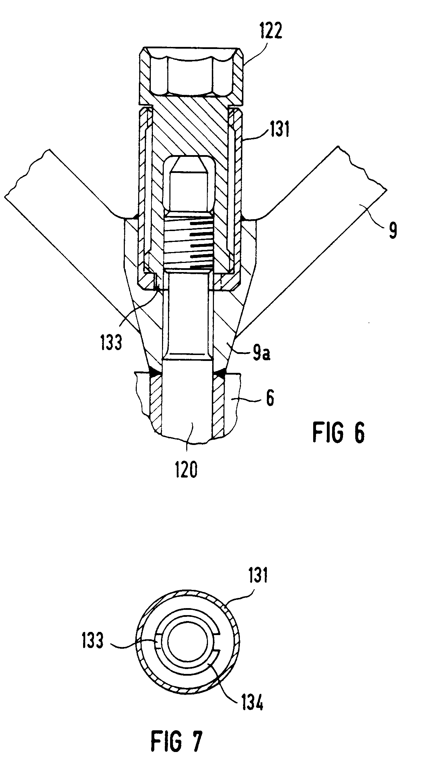

Das Endstück WRb am Oberende des Kühlmittelrohres weist zwei Stehbolzen 120 und 121 auf, die verschiedene Außendurchmesser haben und mit Gewinde versehen sind. Mit dem Gewinde durchgreifen sie die Deckplatte 6 und den Griff 9 auf der Außenseite des Brennelement-Kopfes in einer Diagonalen des Brennelement-Kopfes. Der Griff 9 hat ein zentrales Teil 9a zum Verschrauben mit dem Kühlmittelrohr und zwei seitliche Ausleger 9b, 9c, die sich auf der Oberseite des Brennelement-Kopfes abstützen und an zwei sich diagonal gegenüber befindlichen Stehbolzen 97 zwischen diesen Stehbolzen und den erwähnten Blechstreifen in den Ecken des Brennelement-Kastens WC festgeschraubt sind. Jeweils mit einer auf die Gewindebolzen 120 und 121 aufgeschraubten Überwurfmutter 122 auf der Oberseite des Brennelement-Kopfes sind der Griff und der Brennelement-Kopf auf Anschlag an Schultern 123 und 124 (vgl. FIG 5) an den Stehbolzen 120 und 121 festgeschraubt. Aufgrund der beiden Stehbolzen ist der Kopfteil verdrehungssicher am Kühlmittelrohr festgeschraubt. Die verschiedenen Außendurchmesser der Stehbolzen 120 und 121 sorgen ferner dafür, daß der Brennelement-Kopf stets in derselben Winkelposition im bezug auf die Länsachse des Wasserrohres an diesem Wasserrohr WR festgeschraubt ist.

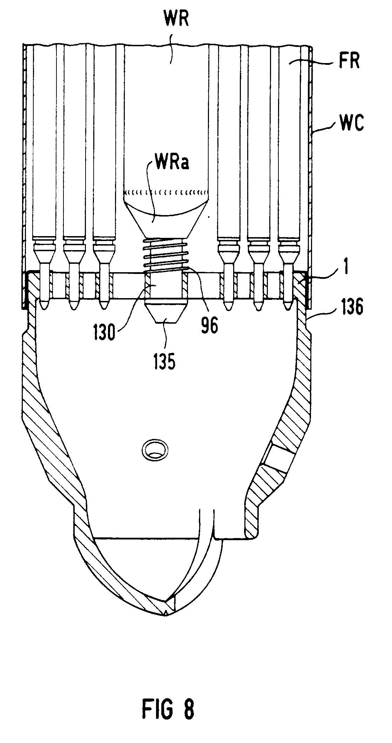

Das Endstück WRa am Unterende des Kühlmittelrohres WR greift mit dem Gewindebolzen 130 (vgl. FIG 8) auf der Oberseite des Brennelement-Fußes durch eine Durchführung der gitterförmigen Bodenplatte 1 und ist dort mit einer Mutter auf Anschlag festgeschraubt.

In einem Siedewasserkernreaktor ist das Kernreaktorbrennelement nach FIG 2 vertikal angeordnet und wird im Brennelement-Kasten von einem Kühlmittel durchströmt, das aus einem Zweiphasengemisch aus Wasser und Dampf besteht. Durch den gitterförmigen Rost des Brennelement-Fußes (Bodenplatte 1) hindurch tritt Wasser in den Brennelement-Kasten 5 ein und durch einen gitterförmigen Rost des Brennelement-Kopfes (Deckplatte 6) hindurch tritt Naßdampf aus dem Brennelement-Kasten aus. Im Kühlmittelrohr befindet sich ausschließlich Wasser in der flüssigen Phase, das eine erhöhte Reaktivität im Reaktorkern des Siedewasserkernreaktors bewirkt.

In Weiterbildung des Kernreaktorbrennelementes ist entsprechend den FIG 4 und 6 die Länge der über die Schultern 123 und 124 hinausragenden Stehbolzen 120 und 121 am oberene Endstück WRb des Kühlmittelrohres so groß gewählt, daß Brennelement-Kopf und Griff nicht auf Anschlag an den Schultern 123, 124 gehaltert sind, sondern daß der Brennelement-Kopf bezüglich diesem Endstück WRb gegen die Federkraft der auf den Brennstäben sitzenden Druckfedern 95 verschiebbar ist. Die als Schraubenfedern ausgebildeten Druckfedern 95 stützen sich mit einem Ende am Brennelement-Kopf (Deckplatte 6) und mit dem anderen Ende an den Brennstäben und damit am Brennelement-Fuß (Bodenplatte 1) ab. Damit können die Druckfedern eine Verschiebung des Griffes und des Brennelement-Kopfes, beispielsweise durch Gewichtskräfte in Richtung auf die Schultern 123 und 124, federnd abfangen. Die Schultern 123 und 124 befinden sich vorteilhafterweise zwischen dem Brennelement-Kopf und der Angriffstelle der Druckfedern 95 an den Brennstäben FR, so daß diese Druckfedern nicht auf Blockbildung beansprucht werden, wenn der Brennelement-Kopf an den Schultern 123 und 124 der als Anschlagkörper wirkenden Stehbolzen 120 und 121 anschlägt.

Andere Anschlagkörper am oberen Endstück sind die auf der Oberseite des Brennelement-Kopfes befindlichen Überwurfmuttern 122 auf den Stehbolzen 120 und 121. Diese Überwurfmuttern definieren eine Ausgangsposition des Brennelement-Kopfes bzw. der Deckplatte 6. Sie sind jeweils in einer am Griff 9 befindlichen Hülse 131 geführt. Die Überwurfmuttern 122 weisen als Verrasterorgan an ihrer Anlagefläche am Griff 9 einen Zapfen 133 auf, der in eine Ringnut 134 als Gegenverrastorgan an der Anlagefläche des Griffes 9 an der Überwurfmutter 122 einrastet. Dadurch kann die Verrastung der Überwurfmuttern 122 mit dem Griff 9 nur gelöst werden, wenn auf den Griff (bzw. auf den Brennelement-Kopf) z.B. eine Gewichtskraft in Richtung auf den Brennelement-Fuß einwirkt und eine Trennbewegung zwischen Überwurfmuttern 122 und Griff in Längsrichtung des Stehbolzens und gegen die Federkraft der Druckfedern 95 erfolgt.

Günstigerweise sind die Stehbolzen 120 und 121 am oberen Endstück des Kühlmittelrohres WR festgeschraubt, so daß sie ohne weiteres ausgetauscht werden können, wenn z.B. ihre Gewinde auf der Außenseite des Brennelement-Kopfes 2 beschädigt sind.

Auch auf den Stehbolzen 120 und 121 können nicht dargestellte Druckfedern sitzen, die z.B. Schraubenfedern sind und sich am Brennelement-Kopf und an den Schultern 120 bzw. 121 abstützen.

Wie FIG 8 zeigt, kann auch das Endstück WRa am Unterende des Kühlmittelrohres mit dem Gewindebolzen 130 durch den Brennelement-Fuß (Bodenplatte 1) greifen und gegen die Federkraft einer als Schraubenfeder ausgebildeten Druckfeder 96 in bezug auf den Brennelement-Fuß verschiebbar sein. Diese Druckfeder 96 sitzt auf dem Gewindebolzen 130 des unteren Endstückes WRa und stützt sich mit einem Ende am Endstück und damit am Brennelement-Kopf und mit dem anderen Ende am Brennelement-Fuß ab. Der Brennelement-Kopf und der Griff 9 können dann auf Anschlag an den Schultern 123 bzw. 124 des Stehbolzens 120 und 121 festgeschraubt sein. Als Anschlagkörper für das Endstück am Brennelement-Fuß dient einerseits die auf Block belastete Druckfeder 96 auf der Innenseite des Brennelement-Fußes und andererseits eine von unten am Brennelement-Fuß aufgeschraubte, auf dem Stehbolzen 130 sitzende Mutter 135, die so eine Ausgangsposition für den Brennelement-Fuß definiert.

Wie FIG 8 verdeutlicht, kann der am Brennelement-Kopf festgeschraubte Brennelement-Kasten WC an der Mantelfläche 136 des Brennelement-Fußes in Längsrichtung dieses Brennelement-Kastens mit dem Brennelement-Kopf mit verschoben werden.

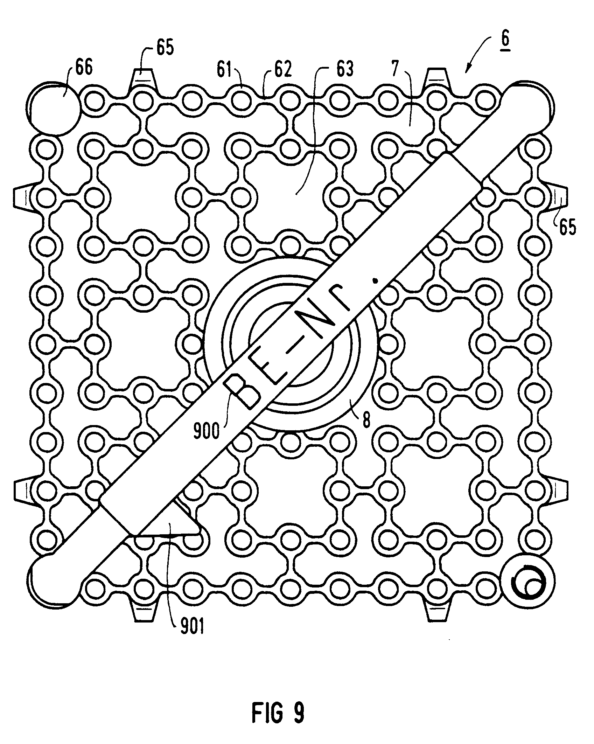

Bei der in FIG 9 gezeigten Deckplatte 6 sind die Positionen der Brennstäbe darstellbar als Maschenmittelpunkte eines Gitters mit quadratischen Maschen. Ein zentraler Bereich von 3 x 3 Maschen ist zur Aufnahme eines quadratischen Kühlmittelrohres ("Wasserrohres") bestimmt und abgedeckt durch ein Verbindungsteil 8 zur tragenden Verbindung zwischen Deckplatte und Wasserrohr. Da vorteilhaft nur ein Teil der Brennstäbe sich praktisch über die ganze Länge zwischen Bodenplatte und Deckplatte erstreckt, die anderen Stäbe aber kürzer sind und am oberen Ende eine obere Verschlußkappe tragen, die bereits in der Nähe eines Abstandhalters und im Abstand von der Deckplatte liegen, wird der Wasserauslaß in der Deckplatte von Auslaßöffnungen 7, die zwischen den Positionen langer Brennstäbe liegen, und vergrößerten Auslaßöffnungen 63 gebildet, die in der Verlängerung der kürzeren Brennstäbe angeordnet sind. Da Schraubverbindungen zwischen Deckplatte und Brennstäben vermieden werden sollen, enden die oberen Verschlußkappen FRb der längeren Brennstäbe als glatte, gewindelose Bolzen, die nur locker in Manschetten 61 an den entsprechenden Positionen an der Deckplatte angeordnet sind. Die Deckplatte ist also nicht durch das Gewicht der Brennstäbe belastet, vielmehr verhindert sie nur eine über ein vorgegebenen Spiel hinausgehende axiale Verschiebung der Brennstäbe. Die an den entsprechenden Aufnahmepositionen langer Brennstäbe angeordneten Manschetten 61 sind miteinander über Stege 62 verbunden. Die Deckplatte kann daher so dünn und durchlässig ausgebildet werden, daß das Kühlmittel praktisch ungehindert hindurchtreten kann. Durch geeignete Dimensionierung der Einlaßöffnungen 3 in der Bodenplatte kann dabei erreicht werden, daß eine gleichmäßige Durchströmung des Brennelementes auftritt und der Druckverlust an der Deckplatte gegenüber dem Druckverlust des Kühlmediums beim Durchströmen der Bodenplatte und des Brennelementes vernachlässigbar ist.

Zumindest die meisten vergrößerten Auslaßöffnungen, d.h. die meisten Positionen der kürzeren Brennstäbe, liegen vorteilhaft jeweils in der Diagonalen des Kastenquerschnittes. Bevorzugt gehören Brennstäbe, die der Kastenwand benachbart sind, der Gruppe der langen Brennstäbe an. Insbesondere sind bei einem Brennelement, bei dem die Stützstege der Abstandhalter elf Reihen und elf Spalten von Maschen bilden, die kürzeren Brennstäbe jeweils in der dritten Zeile oder dritten Spalte (von der Kastenwand aus gesehen) angeordnet, wie sich auf FIG 9 ergibt.

Die Deckplatte ist über seitliche Anlagewarzen 65 sowie Verstärkungen 66 der Eck-Manschetten an die Kastenwand und deren abgerundete Ecken abgestützt.

Der Griff 9 kann Markierungen 900, 901 tragen, die zur Kennzeichnung des individuellen Brennelementes sowie zur Definition von rechts und links dienen, sofern insbesondere die Brennstoff-Füllungen in den einzelnen Brennstäben für individuelle Brennelemente und deren Teile unterschiedlich sind.

Eine tragende Verbindung zwischen dem Griff 9 und der Deckplatte 6 wird vorteilhaft erreicht, wenn diese beiden Teile einstückig, z.B. als ein gegossenes Werkstück, ausgebildet sind. Der aus Griff und Deckplatte gebildete Kopf HD braucht nur über das Verbindungsteil 8 am oberen Endstück WRb des Wasserrohres verschraubt zu werden, um eine tragende, mechanische Verbindung mit dem Wasserrohr zu erreichen.

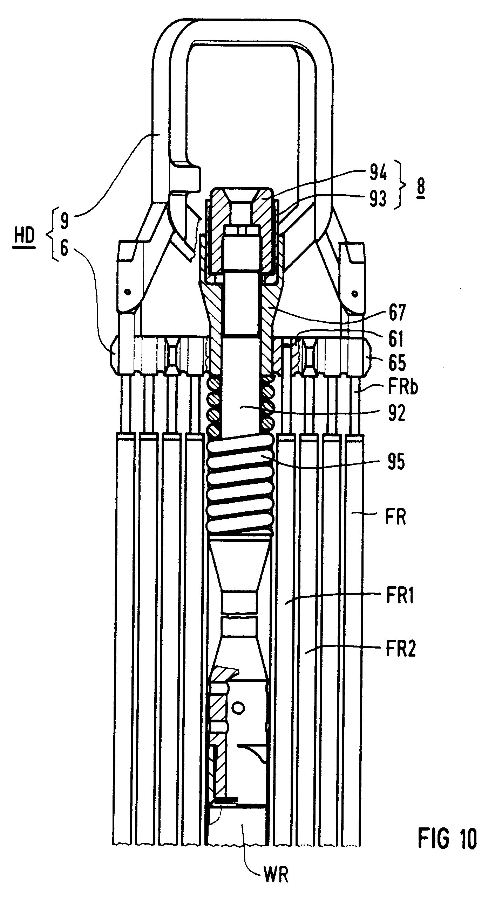

Am Griff ist ein Kragen 67 angeformt (FIG 10) und das obere Endstück WRb des Wasserrohres ist als ein ans Wasserrohr angeschweißter, durch die Deckplatte hindurchgeführter Steckbolzen 92 ausgebildet. Dieser Steckbolzen trägt an dem durch den Kragen geführten oberen Ende ein Außengewinde 93, auf das eine Überwurf-Mutter 94 von oben aufgeschraubt ist.

Die Deckplatte ist gegen die Bodenplatte über eine auf Druck beanspruchte schraubenförmige Feder 95 abgestützt, die vorteilhaft am oberen Endstück (Bolzen 92) zwischen Wasserrohr und Deckplatte angeordnet ist. Wird daher die Deckplatte gegen die Druckkraft der Schraubenfeder 95 niedergehalten, so kann die Überwurfmutter 94 auf das Außengewinde 93 des Steckbolzens 92 bis zu einer gewünschten Endstellung aufgedreht werden. Sie bilden dann bei Entlastung der Schraubenfeder 95 den Anschlag für den Kragen 67 bzw. die Deckplatte 6.

Zwischen diesen Kragen 67 und der Überwurfmutter 94 ist noch eine Sicherungskappe 131 angeordnet, deren oberes Ende die Überwurfmutter 94 teilweise umgreift und gegen ein Abfallen sichert. Wird in der Endstellung die Schraubenfeder 95 entlastet, so greifen entsprechende Profile des Kragens 67 und so der Mutter 94 ineinander und verhindern, daß die Überwurfmutter 94 gegenüber dem Steckbolzen 92 verdreht werden kann.

Am Beispiel des Brennstabes FR1 ist gezeigt, daß dessen obere Verschlußkappe FRa mit einem gewissen seitlichen Spiel in der entsprechenden Manschette 61 nur lose geführt ist. Bei der gezeigten Ausführung dieser Verschlußkappen können die Brennstäbe (zusammen mit dem Wasserrohr) gegen die Kraft der Schraubenfeder 95 auch in Längsrichtung bewegt werden, um eine Materialausdehnung, wie sie infolge Bestrahlung und Erwärmung während des Reaktorbetriebes auftreten kann, auszugleichen. Die Überwurfmutter 94 dient dabei als Anschlagkörper am oberen Endstück WRb des Kühlmittelrohres, das die maximale Ausdehnung der Feder 95 und damit den Maximalabstand zwischen dem Brennelement-Kopf mit der Deckplatte 6 und dem Fußteil mit der Bodenplatte 1 festlegt.

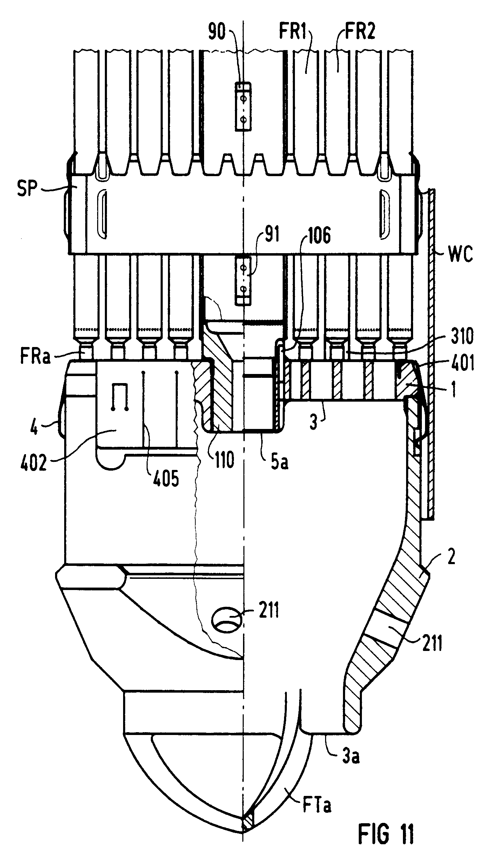

Im Längsschnitt der FIG 10 ist unmittelbar neben dem langen Brennstab FR1 ein Brennstab FR2 sichtbar, der in einer dahinter liegenden Reihe angeordnet ist, denn die unmittelbar neben dem Stab FR1 liegende Position ist von einem kurzen, in FIG 10 nicht sichtbaren Stab besetzt. Die oberen Verschlußkappen FRb tragen kein Schraubgewinde. Dies gilt insbesondere auch für die in FIG 11 sichtbaren unteren Verschlußkappen FRa, die gemäß FIG 11 unverschraubt auf der Bodenplatte 1 aufstehen. Diese Bodenplatte ist starr und tragend mit dem unteren Endstück WRa des Wasserrohres verbunden, so daß die Bodenplatte und das Gewicht der auf ihr aufstehenden Brennstäbe praktisch vollständig von dem Endstück des Wasserrohres getragen und über die lösbare und kraftschlüssige Verbindung des oberen Wasserrohr-Endstückes WCb auf die Deckplatte und den Griff 9 übertragen wird.

Das untere Endstück WRa greift dabei mit einem als Rohrstück 110 ausgeführten Endstift in die Bodenplatte 1 im Fußteil FT des Brennelementes. Sie ist dort verschraubt und durch einen Sicherungsbolzen 106, der in eine Aussparung des Endstückes WRa greift, gegen Verdrehen gesichert.

Die untere Verschlußkappe FRa eines langen Brennstabes FR1 kann auf der Bodenplatte aufstehen oder in entsprechenden Aufnahmeöffnungen lose geführt sein. Zumindest für die kurzen Brennstäbe ist eine Steckverbindung vorgesehen, z.B. ein als Bajonettverschluß ausgebildeter Sockel 310, in den ein entsprechender Adapter an der unteren Verschlußkappe des kurzen Brennstabes eingreift und durch eine Vierteldrehung verriegelt werden kann. Mit Ausnahme der Schraubverbindung zwischen Wasserrohr und Bodenplatte sind also am Fußteil keine weiteren Schraubverbindungen vorhanden. Das Fußteil selbst besteht aus einem Übergangsstück 2, das an seinem unteren Ende sternförmige Bügel FTa und eine Öffnung 3a trägt und einen Strömungskanal bildet, der an seinem oberen Ende durch die Bodenplatte 1 mit den Wassereinlässen 3 abgedeckt ist, durch die das Kühlmedium in das Innere des Brennelementes eintritt.

Gegen den seitlichen oberen Rand des Fußteiles FT ist der untere Rand WCa des Brennelementkastens durch eine Dichtfeder 4 abgestützt und gedichtet. Im linken Teil der FIG 4, die eine Seitenansicht des Fußteiles zeigt, ist die untere Längsseite 402 der Dichtfeder, die durch Schlitze 405 gefiedert ist, erkennbar, während die andere Längsseite 401 um die Kante zwischen Bodenplatte und Übergangsstück gebogen ist.

Da diese Dichtfeder einen unkontrollierten Strom des Kühlmittels zwischen dem Fußteil und dem Brennelementkasten weitgehend versperrt, kann der Kühlmittelstrom durch entsprechende Dimensionierung der Einlaßöffnungen 3 und seitlichen Austrittskanälen 211 in einer definierten Weise aufgeteilt werden in innerhalb und außerhalb des Kastens WC flößende Teilströme.

Bei der vorliegenden Konstruktion werden die Brennelemente in einem Skelett gehalten, dessen tragende Säule das Wasserrohr ist. Die Brennstäbe sind nicht Teil des Skelettes und die Bodenplatte enthält keine Gewindebohrungen zur Aufnahme der Brennelement-Verschlußkappen. Daher brauchen die Bodenplatten jeweils nur entsprechende Anschläge zu bilden, auf denen die Verschlußkappen aufsetzen, können aber im übrigen frei gestaltet werden. Insbesondere können die Einlaßöffnungen 3 z.B. als schmale Schlitze oder in einer anderen Weise so ausgebildet sien, daß sie von größeren Fremdkörpern nicht passiert werden können. Die Bodenplatte wirkt dann als Sieb, an dem abgebrochene Teile oder andere Fremdkörper bestimmter Abmessungen zurückgehalten werden, so daß sie nicht in das Innere des Brennelementes gelangen und dort den Kühlmittelstrom stören können.

Das Wasserrohr WR trägt in FIG 11 ferner Anschlagkörper 90, 91 die jeweils die axiale Position eines Abstandshalters SP festlegen. Zur Montage dieser Abstandhalter wird - beginnend an einem Ende des Wasserrohres - jeweils ein Anschlagkörper am Wasserrohr befestigt, z.B. durch Punktschweißen. Anschließend wird von dem anderen, freien Ende her der entsprechende Abstandhalter bis in die Höhe des bereits befestigten Anschlagkörpers geschoben und dort gehaltert, indem anschließend der andere Anschlagkörper an der gegenüberliegenden Seite des Abstandhalter auf dem Wasserrohr befestigt wird.

Auf diese Weise können nacheinander alle Abstandhalter am Wasserrohr befestigt werden, solange wenigstens das obere oder das untere Ende des Wasserrohres noch zugänglich ist.

Bevor das tragende Skelett durch Verschraubungen von Wasserrohr und Kopfteil endgültig montiert wird, werden die Brennstäbe in die Maschen der einzelnen Abstandhalter eingesetzt. Die Endmontage des tragenden Skelettes erfolgt dann, indem das Kopfteil auf das Wasserrohr aufgeschraubt wird, wobei die Brennstäbe von unten in ihre entsprechenden Aufnahmepositionen an der Deckplatte eingeführt werden. Es braucht dann nur noch der Brennelement-Kasten über dieses, die Stäbe und das Skelett geschoben zu werden. Dadurch ist die Montage und Demontage des Brennelementes und das Auswechseln der Brennstäbe auf wenige, einfache Handhabungen beschränkt. Insbesondere brauchen die Brennstäbe nicht an der Bodenplatte ein- und ausgeschraubt zu werden.

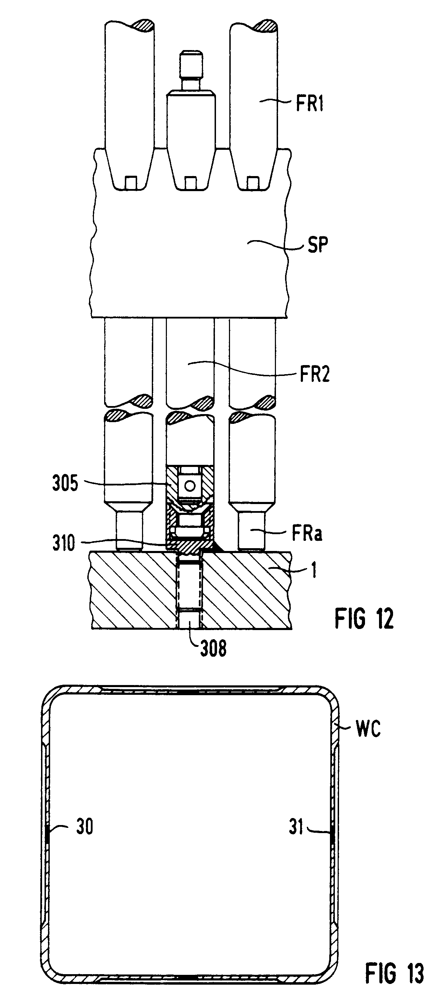

In FIG 12 ist die Bodenplatte 2 mit den darauf aufstehenden unteren Verschlußstücken FRa der langen Brennstäbe sowie dem an der Bodenplatte befestigten Sockel 310 gezeigt, in dessen Profil eine als Adapter 305 dienende profilierte Verlängerung der unteren Verschlußkappe eines kürzeren Brennstabes eingreift. Der Sockel 310 ist dabei in einer Bohrung 308 der Bodenplatte gehalten.

Vorzugsweise erstrecken sich auch die kürzeren Brennstäbe zumindest über das untere Drittel, z.B. über die untere Hälfte des Brennelementes, so daß alle Brennstäbe jeweils die Maschen der unteren Abstandhalter durchsetzten. In FIG 12 ist einer der Abstandhalter SP im oberen Teil des Brennelementes dargestellt, in dessen Nähe die obere Verschlußkappe eines kürzeren Brennstabes endet, während die längeren Brennstäbe sich bis zum Brennelement-Kopf erstrecken. Der Brennelement-Kasten hat vorzugsweise einen quadratischen Querschnitt, wobei die Wanddicke seiner Seitenwände zumindest in einigen axialen Bereichen des Brennelementes reduziert ist (FIG 13). Er kann aus mehreren Teilen zusammengesetzt sein, wobei die Seitenwände Schweißnähte (30, 31) tragen, die teils der Verstärkung, teils der Verbindung von Profilteilen dienen.

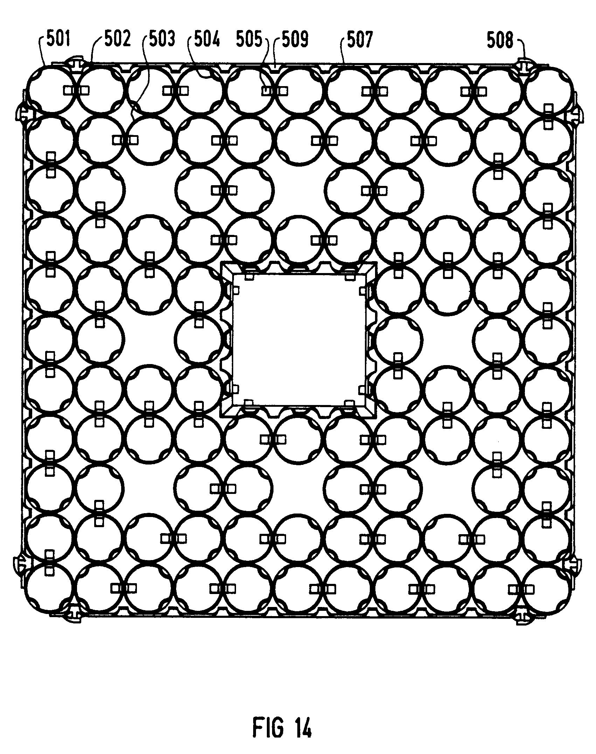

FIG 14 zeigt den unter der Deckplatte liegenden, obersten Abstandhalter eines derartien Brennelementes mit kürzeren und längeren Brennstäben. Die Stützstege zum Abstützen der Brennstäbe sind dabei als ringförmige Hülsen 501, 502, 503 ausgebildet, die miteinander befestigt sind und Stütznoppen 504 und Stützfedern 505 zum Abstützen der Brennstäbe tragen. Die Außenstege 507 sind über Randnoppen 508 am Brennelement-Kasten abgestützt und tragen Laschen 509, die in das Innere des Brennelementes gerichtet sind.

Auf diese Weise entsteht ein mechanisch sehr stabiles Brennelement, das auf einfache Weise aus wenigen Teilen zusammengesetzt und leicht zu inspizieren und demontieren ist.

## Patentansprüche

1. Kernreaktorbrennelement, mit
a) mindestens einem Kühlmittelrohr (WR) mit jeweils einer Öffnung (5a, 5b) und einem Endstück (WRa, WRb) an seinem oberen und unteren Ende,
b) einer von Kühlmittelrohr (WR) getragenen, mit dessen unteren Endstück (WRa) formstarr verbundenen Bodenplatte (1) mit Einlaßöffnungen (3) für flüssiges Kühlmittel,
c) einer das obere Endstück (WRb) haltenden Deckplatte (6) mit Auslaßöffnungen (7) für ein Flüssigkeits/Dampf-Gemisch des Kühlmittels, und
d) an dem Kühlmittelrohr zwischen dessen beiden Platten (1, 6) angebrachten, gitterförmigen Abstandhaltern (SP), die durch Haltemittel (90,91) am Kühlmittelrohr gehalten sind und durch deren Maschen Brennstäbe (FR) geführt sind,
e) wobei alle Brennstäbe des Brennelements mit Kernbrennstoff gefüllt und höchstens mit einer der beiden Platten verbunden sind.

2. Brennelement nach Anspruch 1, **dadurch gekennzeichnet,** daß die Deckplatte (6) an einem auf dem oberen Endstück (WRb) des Kühlmittelrohres aufgesetzten Anschlagkörper (8) lösbar gehalten ist und daß nur Brennstäbe (FR2), die kürzer als andere Brennstäbe (FR1) des gleichen Brennelementes sind, mittels einer unteren Verschlußkappe (305) an der Bodenplatte gehalten sind.

3. Kernreaktorbrennelement mit
a) einem Bündel parallel zueinander ausgerichteter, Kernbrennstoff enthaltender Brennstäbe (FR),
b) einem über dem Bündel angeordneten Brennelementkopf (HD) mit einem Griff (9) an seiner Oberseite,
c) einer unterhalb des Bündels angeordneten, für flüssiges Kühlmittel durchlässigen Bodenplatte (1),
d) einem im Bündel angeordneten, zu den Brennstäben parallelen, an seinen beiden Enden geöffneten Kühlmittelrohr (WR), das an seinem unteren Ende ein unteres Endstück (WRa) aufweist und mittels dieses unteren Endstückes an der Bodenplatte (1) gehaltert ist, und
e) einem oberen Endstück (WRb) des Kühlmittelrohres, das von unten in eine Ausnehmung des Brennelement-Kopfes hineinragt,
**dadurch gekennzeichnet,** daß das obere Endstück (WRb) am Brennelement-Kopf und das untere Endstück (WRa) an der Bodenplatte tragend gehaltert sind.

4. Brennelement nach Anspruch 3, **dadurch gekennzeichnet,** daß das untere Endstück (WRa) an der Bodenplatte (1) oder vorzugsweise das obere Endstück (WRb) am Brennelement-Kopf (Hd) in Längsrichtung verschiebbar gelagert ist und einen Anschlagkörper (8) trägt, der den maximalen Abstand zwischen Bodenplatte (1) und Brennelement-Kopf (HD) festlegt, und daß die Bodenplatte (1) bzw. der Brennelement-Kopf (Hd) durch die Kraft mindestens einer zwischen Brennelement-Kopf und Bodenplatte angeordneten Feder (95;96) gegen den Anschlagkörper gepreßt ist.

5. Brennelement nach Anspruch 4, **dadurch gekennzeichnet,** daß am verschiebbar gelagerten Endstück (WRb) eine Anschlagschulter (123,124) angeformt ist, die einen minimalen Abstand zwischen Brennelement-Kopf und Bodenplatte festlegt.

6. Brennelement nach Anspruch 4, **dadurch gekennzeichnet,** daß die Feder (96) auf einem Brennstab (FR) angeordnet ist.

7. Brennelement nach Anspruch 4, **dadurch gekennzeichnet,** daß die Feder (95) auf einem der Endstücke, vorzugsweise dem oberen Endstück (WRb) angeordnet ist.

8. Brennelement nach Anspruch 3, **dadurch gekennzeichnet,** daß das obere Endstück (WRb) durch ein am Griff angeformtes Teil (67, 9a) des Brennelement-Kopfes durchgesteckt, gegen Verdrehung gesichert und von oben verschraubt ist.

9. Brennelement nach Anspruch 3, **dadurch gekennzeichnet,** daß das obere Endstück (WRb) einen Steckbolzen (92) und der Brennelement-Kopf eine von Kühlmittelaustrittsöffnungen (7) durchbrochene Deckplatte (6) trägt, und daß der Steckbolzen (92) die Deckplatte durchgreift und einen lösbar aufgesetzten Anschlagkörper (8, 122) für die Deckplatte trägt.

10. Kernreaktorbrennelement nach Anspruch 9, **dadurch gekennzeichnet,** daß die Bodenplatte (1) über eine tragende mechanische Verbindung am unteren Endstück (WRa) des Kühlmittelrohres befestigt ist, die Deckplatte auf das obere Endstück (WRb) des Kühlmittelrohres aufgesetzt und durch eine auf Druck beanspruchte Feder gegen den Anschlagkörper (8, 122) gepreßt ist, und daß jeweils das obere Ende jedes Brennstabes eine obere Verschlußkappe (FRb) trägt, die in einer entsprechenden Aufnahmeposition an der Deckplatte nur lose geführt ist oder die Deckplatte nicht berührt.

11. Kernbrennelement eines Siedewasserkernreaktors, mit
a) einem das Brennelement seitlich umgebenden, oben und unten offenen Brennelement-Kasten (WC),
b) einem in axialer Richtung (AX) sich erstreckenden Kühlmittelrohr (WR) im Inneren des Kastens (WC) mit jeweils mindestens einer Öffnung (5a, 5b) an seinem oberen und unteren Ende zum Durchtritt von Wasser,
c) einer mit Kühlmittelauslässen (7) versehenen Deckplatte (6) zum Abdecken des oberen Endes des Brennelement-Kastens (WC),
d) einer mit Kühlmitteleinlässen (3) versehenen Bodenplatte (1) zum Abdecken des unteren Endes des Brennelement-Kastens (WC),
e) mehreren, in vorgegebenen axialen Positionen praktisch senkrecht zum Kühlmittelrohr stehenden, am Kühlmittelrohr gehaltenen und Stützstege enthaltenden Abstandshalters (SP) und
f) einer Vielzahl von zum Kasten parallelen Brennstäben (FR), die jeweils an den Stützstegen mehrerer Abstandhalter (SP) unterstützt sind,
**gekennzeichnet durch**
g) untere Verschlußkappen (FRa), die unverschraubt auf der Bodenplatte (1) aufstehen, und an den unteren Enden zumindest aller derjenigen Brennstäbe (FR1), die sich praktisch bis zur Deckplatte erstrecken, angeordnet sind,
h) ein mit der Bodenplatte (1) starrverbundenes unteres Endstück (WRa) des Kühlmittelrohres (WR), wobei die starre Verbindung praktisch alle auf die Bodenplatte ausgeübten Kräfte auf das untere Endstück und das Kühlmittelrohr überträgt und
i) ein von der Deckplatte über eine lösbare Verbindung (8) getragenes oberes Endstück (WRb) des Kühlmittelrohres.

12. Brennelement nach Anspruch 11, **dadurch gekennzeichnet,** daß wenigstens zwei Abstandhalter (SP) von allen Brennstäben des Brennelementes durchsetzt sind und daß wenigstens bei einer ersten Gruppe von Brennstäben (FR1) jeder Brennstab sich von der Bodenplatte (1) bis zur Deckplatte (6) erstreckt und an seinem unteren Ende eine untere Verschlußkappe (FRa), die auf der zur Deckplatte weisenden Oberseite der Bodenplatte aufsteht, und an seinem oberen Ende eine obere Verschlußkappe (FRb) trägt, die an entsprechenden Aufnahmepositionen an der Deckplatte locker angeordnet ist.

13. Brennelement nach Anspruch 12, **dadurch gekennzeichnet,** daß bei einer zweiten Gruppe der Brennstäbe jeder Brennstab (FR2) kürzer ist als ein Brennstab (FR1) der ersten Gruppe und an seinem unteren ende eine untere Verschlußkappe (305), die an der Bodenplatte (1) gehaltert ist, und an seinem oberen Ende eine obere Verschlußkappe trägt, die in der Nähe eines Abstandhalters und im Abstand von der Deckplatte angeordnet ist. (FIG 12)

14. Brennelement nach Anspruch 13, **dadurch gekennzeichnet,** daß die unteren Verschlußkappen (305) der Brennstäbe der zweiten Gruppe über eine Steckverbindung mit der Bodenplatte verbunden sind.

15. Brennelement nach Anspruch 13 oder 14, **dadurch gekennzeichnet,** daß die Kühlmittelauslässe in der Deckplatte (6) von Auslaßöffnungen (7) zwischen den Aufnahmepositionen der Brennstäbe der ersten Gruppe und von vergrößerten Auslaßöffnungen (63) gebildet werden, die in der Verlängerung der kürzeren Brennstäbe angeordnet sind. (FIG 9)

16. Brennelement nach Anspruch 13 oder einem der Ansprüche 14 und 15, **dadurch gekennzeichnet,** daß jeweils in Diagonalen des Kastenquerschnittes Brennstäbe der zweiten Gruppe angeordnet sind.

17. Brennelement nach Anspruch 13 oder einem der Ansprüche 14 bis 16, **dadurch gekennzeichnet,** daß jeweils zu den Kastenwänden benachbarte Brennstäbe der ersten Gruppe angehören.

18. Brennelement nach Anspruch 11 oder einem der Ansprüche 12 bis 17, **dadurch gekennzeichnet,** daß die Stützstege der Abstandhalter elf Reihen und elf Spalten von Maschen bilden und daß die Brennstäbe (FR2) der zweiten Gruppe jeweils in der dritten Zeile oder dritten Spalte - von der Kastenwand aus gesehen - angeordnet sind.

19. Brennelement nach Anspruch 11 oder einem der Ansprüche 12 bis 18, **dadurch gekennzeichnet,** daß das obere Endstück (WRb) des Kühlmittelrohres von unten durch die Deckplatte (6) hindurchgeführt und von oben an der Deckplatte und/oder einem Griff verschraubt ist.

20. Brennelement nach Anspruch 19, **dadurch gekennzeichnet,** daß der Griff (9) unlösbar an der Deckplatte (6) befestigt ist.

21. Brennelement nach Anspruch 11 oder einem der folgenden Ansprüche, **dadurch gekennzeichnet,** daß das untere Endstück (110) des Kühlmittelrohres in ein an die Bodenplatte (1) angeformtes Teil eingeführt ist und dort mittels eines Sicherungsbolzens (106) gesichert und gegen gegenseitige Verdrehung von Bodenplatte und Kühlmittelrohr geschützt ist. (Fig. 11)

22. Brennelement nach Anspruch 19 oder einem der folgenden Ansprüche, **dadurch gekennzeichnet,** daß die Deckplatte (6) gegen die Bodenplatte (1) federnd abgestützt ist.

23. Brennelement nach Anspruch 11 oder einem der folgenden Ansprüche, **dadurch gekennzeichnet,** daß die Kühlmitteleinlässe (3) in der Bodenplatte von Durchtrittsöffnungen gebildet sind, deren Querschnitte so gewählt sind, daß eine gleichmäßige Durchströmung des Brennelementes mit einem Druckverlust entsteht, gegenüber dem der Druckverlust an den Kühlmittelauslässen (7, 63) der Deckplatte vernachlässigbar ist.

24. Brennelement nach Anspruch 1, 3, 11 oder einem der anderen Ansprüche, **dadurch gekennzeichnet,** daß alle Brennstäbe an ihrem oberen und unteren Ende gewindelose Verschlußkappen (FRa, FRb) tragen.

## Claims

1. Nuclear reactor fuel element having
a) at least one coolant tube (WR) with, in each case, an opening (5a, 5b) and an end piece (WRa, WRb) at its upper and lower end,
b) a base plate (1) which is supported by coolant tube (WR), is connected with the latter's lower end piece (WRa) in a dimensionally rigid manner and has inlet openings (3) for liquid coolant,
c) a cover plate (6), which holds the upper end piece (WRb) and has outlet openings (7) for a liquid/steam-mixture of the coolant, and
d) grid-like spacers (SP) which are fitted on the coolant tube between the latter's two plates (1, 6), are held on the coolant tube by holding means (90, 91) and through the meshes of which are guided fuel rods (FR),
e) wherein all the fuel rods of the fuel element are filled with nuclear fuel and are connected at most with one of the two plates.

2. Fuel element according to claim 1,
characterised in that the cover plate (6) is held in a detachable manner on a stop body (8) which is placed on the upper end piece (WRb) of the coolant tube and in that only fuel rods (FR2) which are shorter than other fuel rods (FR1) of the same fuel element, are held on the base plate by means of a lower closure cap (305).

3. Nuclear reactor fuel element having
a) a bundle of fuel rods (FR) which are aligned in parallel with each other and contain nuclear fuel,
b) a fuel element head (HD), arranged above the bundle and having a handle (9) on its upper side,
c) a base plate (1) which is arranged underneath the bundle and is permeable to liquid coolant,
d) a coolant tube (WR) which is arranged in the bundle, is parallel to the fuel rods, is open at its two ends, has at its lower end a lower end piece (WRa) and is held by means of this lower end piece on the base plate (1), and
e) an upper end piece (WRb) of the coolant tube which projects from below into a recess of the fuel element head,
characterised in that the upper end piece (WRb) is held in a supporting manner at the fuel element head and the lower end piece (WRa) is held in a supporting manner at the base plate.

4. Fuel element according to claim 3,
characterised in that the lower end piece (WRa) is mounted on the base plate (1) so as to be displaceable in the longitudinal direction or preferably the upper end piece (WRb) is mounted on the fuel element head (Hd) so as to be displaceable in the longitudinal direction and supports a stop body (8) which defines the maximum distance between base plate (1) and fuel element head (HD) and in that the base plate (1) or the fuel element head (Hd) is pressed towards the stop body by means of the force at least of one spring (95, 96) which is arranged between fuel element head and base plate.

5. Fuel element according to claim 4,
characterised in that a stop shoulder (123, 124) is pre-formed on the displaceably mounted end piece (WRb) and defines a minimum distance between fuel element head and base plate.

6. Fuel element according to claim 4,
characterised in that the spring (96) is arranged on a fuel rod (FR).

7. Fuel element according to claim 4,
characterised in that the spring (95) is arranged on one of the end pieces, preferably on the upper end piece (WRb).

8. Fuel element according to claim 3,
characterised in that the upper end piece (WRb) is plugged through a portion (67, 9a) of the fuel element head that is pre-formed on the handle, is secured against torsion and is screwed on from above.

9. Fuel element according to claim 3,
characterised in that the upper end piece (WRb) bears a socket pin (92) and the fuel element head bears a cover plate (6) broken through by coolant outlet openings (7) and in that the socket pin (92) engages through the cover plate and bears a stop body (8, 122), which is placed thereon in a detachable manner, for the cover plate.

10. Nuclear reactor fuel element according to claim 9, characterised in that the base plate (1) is secured to the lower end piece (WRa) of the coolant tube by way of a supporting mechanical connection, the cover plate is placed on the upper end piece (WRb) of the coolant tube and is pressed against the stop body (8, 122) by means of a spring under pressure and in that the respective upper end of each fuel rod bears an upper closure cap (FRb) which in an appropriate receiving position is only guided loosely on the cover plate or does not contact the cover plate.

11. Nuclear fuel element of a boiling water nuclear reactor having
a) a fuel element case (WC) which laterally surrounds the fuel element and is open at the top and bottom,
b) a coolant tube (WR) extending in the axial direction (AX) in the interior of the case (WC) and having at least one respective opening (5a, 5b) at its upper and lower end for the passage of water,
c) a cover plate (6) provided with coolant outlets (7) to cover the upper end of the fuel element case (WC),
d) a base plate (1) provided with coolant inlets (3) to cover the lower end of the fuel element case (WC),
e) several spacers (SP) which are substantially perpendicular to the coolant tube in given axial positions, are held on the coolant tube and contain support webs, and
f) a plurality of fuel rods (FR) which are parallel to the case and which are each supported at the support webs of several spacers (SP),
characterised by
g) lower closure caps (FRa) which stand unscrewed on the base plate (1) and which are arranged at the lower ends at least of all those fuel rods (FR1) which extend substantially as far as the cover plate,
h) a lower end piece (WRa) of the coolant tube (WR) which is rigidly connected with the base plate (1), with the rigid connection transmitting substantially all the forces exerted on the base plate to the lower end piece and the coolant tube, and
i) an upper end piece (WRb) of the coolant tube that is carried by the cover plate by way of a releasable connection (8).

12. Fuel element according to claim 11,
characterised in that at least two spacers (SP) have all the fuel rods of the fuel element passing through them and in that at least in the case of a first group of fuel rods (FR1) each fuel rod extends from the base plate (1) as far as the cover plate (6) and bears at its lower end a lower closure cap (FRa), which stands on the upper side of the base plate that points towards the cover plate, and bears at its upper end an upper closure cap (FRb) which is arranged loosely on the cover plate at appropriate receiving positions.

13. Fuel element according to claim 12,
characterised in that in the case of a second group of the fuel rods each fuel rod (FR2) is shorter than a fuel rod (FR1) of the first group and bears at its lower end a lower closure cap (305), which is held on the base plate (1), and bears at its upper end an upper closure cap which is arranged close to a spacer and at a distance from the cover plate. (Figure 12)

14. Fuel element according to claim 13,
characterised in that the lower closure caps (305) of the fuel rods of the second group are connected with the base plate by way of a plug connection.

15. Fuel element according to claim 13 or 14,
characterised in that the coolant outlets in the cover plate (6) are formed by outlet openings (7) between the receiving positions of the fuel rods of the first group and by enlarged outlet openings (63) which are arranged in the extension of the shorter fuel rods. (Figure 9)

16. Fuel element according to claim 13 or one of the claims 14 and 15, characterised in that fuel rods of the second group are each arranged in diagonals of the cross section of the case.

17. Fuel element according to claim 13 or one of the claims 14 to 16, characterised in that fuel rods, which in each case are adjacent to the case walls, belong to the first group.

18. Fuel element according to claim 11 or one of the claims 12 to 17, characterised in that the support webs of the spacers form eleven rows and eleven columns of meshes, and in that the fuel rods (FR2) of the second group are each arranged in the third line or third column - viewed from the case wall.

19. Fuel element according to claim 11 or one of the claims 12 to 18, characterised in that the upper end piece (WRb) of the coolant tube is guided from below through the cover plate (6) and is screwed from above on the cover plate and/or a handle.

20. Fuel element according to claim 19, characterised in that the handle (9) is secured to the cover plate (6) in a non-detachable manner.

21. Fuel element according to claim 11 or one of the following claims, characterised in that the lower end piece (110) of the coolant tube is inserted into a portion, which is pre-formed on the base plate (1), and is there secured by means of a securing bolt (106) and is protected against relative torsion of base plate and coolant tube. (Figure 11)

22. Fuel element according to claim 19 or one of the following claims, characterised in that the cover plate (6) is stayed in a resilient manner against the base plate (1).

23. Fuel element according to claim 11 or one of the following claims, characterised in that the coolant inlets (3) are formed in the base plate by passage openings, the cross sections of which are selected such that a uniform flow through the fuel element results with a pressure loss compared with which the pressure loss at the coolant outlets (7, 63) of the cover plate is negligible.

24. Fuel element according to claim 1, 3, 11 or one of the other claims, characterised in that all the fuel rods bear threadless closure caps (FRa, FRb) at their upper and lower end.

## Revendications

1. Assemblage combustible de réacteur nucléaire, comprenant
a) au moins un conduit (WR) pour du fluide de refroidissement ayant un orifice (5a, 5b) et une pièce d'extrémité (WRa, WRb) à chacune de ses extrémités inférieure et supérieure,
b) une plaque de fond (1) portée par le conduit (WR) pour du fluide de refroidissement, fixée rigidement à sa pièce d'extrémité (WRa) inférieure et ayant des orifices (3) d'entrée pour du fluide de refroidissement liquide,
c) une plaque supérieure (6), portant la pièce d'extrémité (WRb) supérieure, et ayant des orifices (7) de sortie pour un mélange liquide/vapeur du fluide de refroidissement, et
d) des entretoises (SP) en forme de grille qui sont montées sur le conduit pour du fluide de refroidissement, entre ses deux plaques (1, 6), et qui sont maintenues sur le conduit pour du fluide de refroidissement par des moyens (90, 91) de fixation et dans les mailles desquelles passent des crayons combustibles (FR),
e) tous les crayons combustibles de l'assemblage combustible étant emplis d'un combustible nucléaire et reliés au plus à l'une des deux plaques.

2. Assemblage combustible selon la revendication 1, caractérisé en ce que la plaque supérieure (6) est maintenue de manière amovible à une pièce (8) de butée posée sur la pièce d'extrémité (WRb) supérieure du conduit pour du fluide de refroidissement et en ce que, seuls des crayons (FR2) combustibles, qui sont plus courts que d'autres crayons (FR1) combustibles du même assemblage combustible sont maintenus sur la plaque de fond au moyen d'un chapeau (305) de fermeture inférieure.

3. Assemblage combustible de réacteur nucléaire comprenant
a) un faisceau de crayons (FR) combustibles contenant du combustible nucléaire et disposés parallèlement les uns aux autres,
b) une tête (HD) d'assemblage combustible disposée au-dessus du faisceau et munie d'une poignée (9) à son côté supérieur,
c) une plaque (1) de fond disposée sous le faisceau et laissant passer du liquide de refroidissement,
d) un conduit (WR) pour du fluide de refroidissement, disposé en faisceau, parallèle aux crayons combustibles, ouvert à ses deux extrémités et comprenant à son extrémité inférieure une pièce d'extrémité (WRa) inférieure au moyen de laquelle il est maintenu à la plaque (1) de fond, et
e) une pièce d'extrémité (WRb) supérieure du conduit pour du fluide de refroidissement, qui pénètre par le bas dans un creux de la tête de l'assemblage combustible,
caractérisé en ce que la pièce d'extrémité (WRb) supérieure est maintenue à la tête de l'assemblage combustible et la pièce d'extrémité (WRa) inférieure est portée par la plaque de fond.

4. Assemblage combustible selon la revendication 3, caractérisé en ce que la pièce d'extrémité (WRa) inférieure est montée coulissante dans la direction longitudinale sur la plaque (1) de fond, ou de préférence la pièce d'extrémité (WRb) supérieure est montée coulissante dans la direction longitudinale sur la tête (HD) de l'assemblage combustible et porte contre une pièce (8) de butée qui détermine la distance maximale entre la plaque de fond (1) et la tête (HD) d'assemblage combustible, et en ce que la plaque de fond (1) ou respectivement la tête (HD) d'assemblage combustible est poussée contre la pièce de butée par la force d'au moins un ressort (95, 96) placé entre la pièce d'assemblage combustible et la plaque de fond.

5. Assemblage combustible selon la revendication 4, caractérisé en ce que, sur la pièce d'extrémité (WRb) montée coulissante est formé un épaulement (123, 124) de butée, qui définit une distance minimale de la plaque de fond à la tête d'assemblage combustible.

6. Assemblage combustible selon la revendication 4, caractérisé en ce que le ressort (96) est monté sur un crayon (FR) combustible.

7. Assemblage combustible selon la revendication 4, caractérisé en ce que le ressort (95) est monté sur une pièce d'extrémité, de préférence la pièce d'extrémité (WRb) supérieure.

8. Assemblage combustible selon la revendication 3, caractérisé en ce que la pièce d'extrémité (WRb) supérieure est enfilée dans une partie (67, 9a) de la tête d'assemblage combustible issue de la poignée, bloquée contre cette rotation et vissée par le dessus.

9. Assemblage combustible selon la revendication 3, caractérisé en ce que la pièce d'extrémité (WRb) supérieure porte un axe (92) d'enfilage et la tête d'assemblage combustible porte une plaque (6) supérieure perforée d'orifices (7) de sortie de fluide de refroidissement et en ce que l'axe (92) traverse la plaque (6) supérieure et porte une pièce (8, 122) de butée pour la plaque supérieure, cette pièce étant posée de manière amovible.

10. Assemblage combustible de réacteur nucléaire selon la revendication 9, caractérisé en ce que la plaque (1) de fond est fixée par l'intermédiaire d'une liaison mécanique portante à la pièce d'extrémité (WRa) inférieure du conduit pour du fluide de refroidissement, la plaque supérieure est posée sur la pièce d'extrémité (WRb) supérieure du conduit de fluide de refroidissement et est poussée contre une pièce (8, 122) de butée par un ressort sollicité en compression, et en ce que l'extrémité supérieure de chaque crayon combustible porte un chapeau de fermeture (FRb) supérieur, qui est guidé de manière lâche dans une position de réception correspondante sur la plaque supérieure, ou qui ne touche pas la plaque supérieure.

11. Assemblage combustible de réacteur nucléaire à eau bouillante, comprenant
a) un boîtier-canal (WC) entourant latéralement l'assemblage combustible, et ouvert en haut et en bas,
b) un conduit pour du fluide de refroidissement s'étendant en direction (AX) axiale à l'intérieur du boîtier-canal (WC) ayant au moins un orifice (5a, 5b) sur chacune de ses extrémités supérieure et inférieure pour y laisser passer de l'eau,
c) une plaque supérieure (6) munie d'orifices (7) de sortie de fluide de refroidissement, et destinée à recouvrir l'extrémité supérieure du boîtier-canal (WC),
d) une plaque de fond (1) munie d'orifices (3) d'entrée de fluide de refroidissement, et destinée à recouvrir l'extrémité inférieure du boîtier-canal (WC),
e) plusieurs entretoises (SP), disposées en des positions axiales prescrites, pratiquement perpendiculairement au conduit pour du fluide de refroidissement, maintenues à ce conduit et comportant des parties pleines d'appui et
f) une pluralité de crayons (FR) combustibles parallèles au boîtier-canal, qui sont chacun soutenus par les parties pleines d'appui de plusieurs entretoises (SP),
caractérisé par
g) des chapeaux (FRa) de fermeture inférieurs qui reposent, sans être vissés, sur la plaque de fond (1), et qui sont disposés aux extrémités inférieures d'au moins tous ceux des crayons (FR1) combustibles qui s'étendent pratiquement jusqu'à la plaque supérieure,
h) une pièce (WRa) d'extrémité du conduit (WR) pour du fluide de refroidissement, reliée rigidement à la plaque (1) de fond, dans laquelle la liaison rigide transmet pratiquement toutes les forces appliquées à la plaque de fond à la pièce d'extrémité inférieure et au conduit pour du fluide de refroidissement et
i) une pièce d'extrémité (WRb) supérieure du conduit pour du fluide de refroidissement, qui est portée par la plaque supérieure par l'intermédiaire d'une liaison (8) amovible.

12. Assemblage combustible selon la revendication 11, caractérisé en ce que, au moins deux entretoises (SP) sont traversées par tous les crayons combustibles de l'assemblage combustible et en ce que au moins dans un premier groupe de crayons combustibles (FR1) chaque crayon s'étend de la plaque de fond (1) à la plaque supérieure (6) et porte à son extrémité inférieure un chapeau de fermeture (FRa) inférieur, qui est placé sur la surface supérieure de la plaque de fond tournée vers la plaque supérieure et à son extrémité supérieure un chapeau de fermeture supérieur (FRb), qui est monté non serré en une position de réception correspondante dans la plaque supérieure.

13. Assemblage combustible selon la revendication 12, caractérisé en ce que, dans un second groupe de crayons combustibles, chaque crayon (FR2) est plus court qu'un crayon (FR1) du premier groupe et porte à son extrémité inférieure un chapeau (305) de fermeture inférieur, qui est maintenu sur la plaque de fond (1) et porte à son extrémité supérieure un chapeau de fermeture supérieur, qui est disposé à proximité d'une entretoise et à distance de la plaque supérieure.

14. Assemblage combustible selon la revendication 13, caractérisé en ce que les chapeaux de fermeture (305) inférieurs des crayons combustibles du second groupe sont reliés à la plaque de fond au moyen d'une liaison à enfichage.

15. Assemblage combustible selon la revendication 13 ou 14, caractérisé en ce que les sorties de fluide de refroidissement dans la plaque (6) supérieure sont formées d'orifices (7) de sortie compris entre les positions de réception des crayons combustibles du premier groupe et d'orifices (63) de sortie agrandis, qui sont dans le prolongement des crayons combustibles plus courts (FIG 9).

16. Assemblage combustible selon la revendication 13 ou l'une des revendications 14 à 16, caractérisé en ce que des crayons combustibles du second groupe sont disposés dans les diagonales de la coupe transversale du boîtier-canal.

17. Assemblage combustible selon la revendication 13 ou l'une des revendications 14 à 16, caractérisé en ce que des crayons combustibles voisins des parois du boîtier-canal appartiennent au premier groupe.

18. Assemblage combustible selon la revendication 11 ou l'une des revendications 12 à 17, caractérisé en ce que les parties pleines d'appui des entretoises forment onze rangées et onze colonnes de maille et en ce que les crayons combustibles (FR2) du second groupe se trouvent sur la troisième ligne ou la troisième colonne, considéré à partir de la paroi du boîtier-canal.

19. Assemblage combustible selon la revendication 11 ou l'une des revendications 12 à 18, caractérisé en ce que la pièce d'extrémité (WRb) supérieure du conduit pour du fluide de refroidissement traverse par le bas la plaque (6) supérieure et est vissée par le haut à la plaque supérieure et/ou à la poignée.

20. Assemblage combustible selon la revendication 19, caractérisé en ce que la poignée est fixée de manière inamovible à la plaque (6) supérieure.

21. Assemblage combustible selon l'une des revendications 11 à 20, caractérisé en ce que la pièce d'extrémité (110) inférieure du conduit pour du fluide de refroidissement pénètre dans l'une des parties formées sur la plaque (1) de fond, et y est bloquée par un boulon (106) de sécurité et est protégée contre une rotation mutuelle de la plaque de fond et du conduit pour du fluide de refroidissement (FIG 11).

22. Assemblage combustible selon l'une des revendications 19 à 21, caractérisé en ce que la plaque (6) supérieure s'appuie élastiquement contre la plaque (1) de fond.

23. Assemblage combustible selon l'une des revendications 11 à 22, caractérisé en ce que les entrées (3) de fluide de refroidissement dans la plaque de fond sont formées d'orifices d'entrée traversant la plaque supérieure, dont la coupe transversale est choisie de manière à engendrer un courant uniforme dans l'assemblage combustible avec une perte de charge négligeable par rapport à la perte de charge aux sorties (7, 63) de fluide de refroidissement de la plaque supérieure.

24. Assemblage combustible selon la revendication 1, 3, 11 ou l'une des autres revendications, caractérisé en ce que tous les crayons combustibles portent des chapeaux de fermeture (FRa, FRb) non taraudés à leur extrémité inférieure et supérieure.
